# EUROPÄISCHE PATENTSCHRIFT

(11) **EP 1 457 701 B1**
(45) Veröffentlichungstag und Bekanntmachung des Hinweises auf die Patenterteilung: **28.12.2005**
(21) Anmeldenummer: 04003775.6
(22) Anmeldetag: 19.02.2004
(51) Int. Cl.: F16D 43/26, F16D 43/20

(54) **Drehmomentübertragungseinrichtung**
Torque transmission arrangement
Dispositif de transmission de couple

(30) Priorität: 14.03.2003 DE 10311273
(43) Veröffentlichungstag der Anmeldung: 15.09.2004
(73) Patentinhaber: Bayerische Motoren Werke Aktiengesellschaft, 80809 München (DE)
(72) Erfinder: Hofmann, Lars, 82284 Grafrath (DE); Nanos, Sis, 81541 München (DE); Wildgruber, Georg, 84061 Erfolgsbach (DE); Keck, Albrecht, 85764 Oberschleissheim (DE)

(56) Entgegenhaltungen:
- DE-B- 1 038 348
- US-A- 2 762 480
- US-A- 3 054 487
- US-A1- 2002 170 797

## Beschreibung

Die vorliegende Erfindung betrifft ein Drehmomentübertragungseinrichtung gemäß dem Oberbegriff des Patentanspruches 1.

Eine derartige Drehmomentübertragungseinrichtung ist aus der DE 1 038 348 bekannt. Weitere Drehmomentübertragungseinrichtungen sind in der US 2002/0170797, US 3054487 und US 2762480 beschrieben.

Im Antriebsstrang von Fahrzeugen werden üblicherweise Antriebswellen aus Voll- oder Rohrmaterial verwendet, die eine nahezu lineare Torsionssteifigkeitskennlinie haben. Die Steifigkeit der Antriebswellen hat einen wesentlichen Einfluss auf die Steifigkeit des gesamten Antriebsstranges und auf die Fahrzeugakustik. Die Mindesttorsionssteifigkeit der Antriebswellen wird üblicherweise auf die höchsten im Betrieb auftretenden Drehmomente ausgelegt. Im Normalbetrieb treten an den Antriebswellen üblicherweise wesentlich geringere Drehmomente auf. Die Bauteile sind daher bezüglich der meisten auftretenden Betriebszustände überdimensioniert, das heißt torsionssteifer als eigentlich nötig. Torsionsstreife Antriebswellen haben den Nachteil, dass sie unerwünschte Geräusche verstärken, die aus der intermittierenden Arbeitsweise von Verbrennungsmotoren resultieren. Insbesondere bei Fahrzeugen mit Dieselmotoren tritt im Antriebsstrang häufig das sogenannte "Brummen unter Last" auf.

Aufgabe der Erfindung ist es, eine Drehmomentenübertragungseinrichtung zu schaffen, mit der die oben genannten Probleme, insbesondere die Akustikprobleme vermieden werden können.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Drehmomentübertragungseinrichtung, die eine zwei- bzw. mehrstufige Torsionssteifigkeitskennlinie aufweist. Ausgehend von einem lastfreien Zustand hat die Drehmomentübertragungseinrichtung bis zu einem vorgegebenen Drehmoment eine erste, im wesentlichen konstante Torsionssteifigkeit. Bei größeren Drehmomenten vergrößert sich Torsionssteifigkeit auf einen höheren ebenfalls im wesentlichen konstanten Wert.

Konstruktiv kann dies durch zwei Wellen erreicht werden, nämlich eine innere Welle, die in einer Hohlwelle angeordnet ist. Die beiden Wellen stehen über Drehmomentübertragungsmittel, welche eine Drehmomentübertagung von der einen auf die andere Welle ermöglichen, miteinander in Drehverbindung. Wesentlich ist, dass die Drehmomentübertragungsmittel derart ausgebildet sind, dass eine Drehmomentübertragung von der einen auf die andere Welle erst dann erfolgt, wenn die eine Welle um einen vorgegebenen Torsionswinkel gegenüber der anderen Welle tordiert ist bzw. wenn das von der Drehmomentübertragungseinrichtung zu übertragende Drehmoment einen vorgegebenen Wert überschreitet.

Nach einer Weiterbildung der Erfindung sind die innere Welle und die äußere Welle in einem Verbindungsbereich fest miteinander verbunden. Dies kann beispielsweise durch eine Schweißverbindung erreicht werden. Die Drehmomentübertragungsmittel sind axial beabstandet von dem Verbindungsbereich angeordnet.

Nach einer Weiterbildung der Erfindung handelt es sich bei den Drehmomentübertragungsmitteln um Formschlusselemente, zum Beispiel um eine Verzahnung mit einem gewissen Zahnspiel. Durch das Zahnspiel ist sichergestellt, dass die Formschlusselemente erst bei Erreichen bzw. Überschreiten des vorgegebenen Torsionswinkels übereinander greifen. Bei geringen Drehmomenten wird das Drehmoment ausschließlich über eine der beiden Wellen der Drehmomentübertragungseinrichtung übertragen. Bei größeren Drehmomenten werden die beiden Wellen gegeneinander tordiert bis die Formschlusselemente ineinander greifen. Sobald die Formschlusselemente ineinander greifen vergrößert sich die Torsionssteifigkeit der Drehmomentübertragungseinrichtung, da von nun an beide Welle gleichzeitig tordiert werden und das Drehmoment über beide Wellen übertragen wird. Die Drehsteifigkeit der Drehmomentübertragungseinrichtung entspricht dann also im wesentlichen der Summe der Drehsteifigkeiten der beiden Wellen.

Alternativ zu Formschlusselementen können die Drehmomentübertragungsmittel auch als Reibschlusselemente ausgeführt sein, zum Beispiel als schräge gegeneinander laufende Rampen oder ähnliches.

Vorzugsweise weist die innere Welle eine geringere Torsionssteifigkeit auf als die äußere Welle. Jedoch ist auch eine umgekehrte Steifigkeitsverteilung denkbar.

Ferner kann vorgesehen sein, dass bei geringen Drehmomenten Drehmoment ausschließlich über die innere Welle übertragen wird. Nur bei Überschreiten eines vorgegebenen Drehmoments bzw. eines vorgegebenen Torsionswinkels der inneren Welle greifen die Drehmomentübertragungsmittel ein. Bei höheren Drehmomenten wird dann Drehmoment sowohl über die innere Welle als auch über die äußere Welle übertragen. Auch hier ist eine funktionale Umkehr denkbar. Es kann also vorgesehen sein, dass bei geringen Drehmomenten Drehmoment ausschließlich über die äußere Welle und bei höheren Drehmomenten über beide Wellen übertragen wird.

Mit der Erfindung werden insbesondere folgenden Vorteile erreicht:
- bei kleinen Drehmomenten, das heißt bei Drehmomenten, die unterhalb eines vorgegebenen Werts liegen, wird Drehmoment lediglich über eine der beiden Wellen der Drehmomentenübertragungseinrichtung übertragen. Die Drehmomentübertragungseinrichtung ist somit relativ torsionsweich, was hinsichtlich der Akustik von Vorteil ist.
- Bei höheren Drehmomenten wird über beide Wellen Drehmoment übertragen. Die Drehmomentübertragungseinrichtung hat somit eine größere Torsionssteifigkeit und bietet hinreichend Festigkeitsreserven.
- Für Zug- und Schubbetrieb können im Bezug auf eine lastfreie Relativstellung der beiden Wellen unterschiedliche Zahnspiele vorgesehen sein. Anders ausgedrückt können die vorgegebenen Torsionswinkel, ab denen beide Wellen Drehmoment übertragen, das heißt ab denen die Drehmomentübertragungsmittel zum Einsatz kommen, unterschiedlich groß sein.

Im folgenden wir die Erfindung im Zusammenhang mit der Zeichnung näher erläutert. Es zeigen:
- Figur 1: eine schematische Darstellung der Anordnung der beiden Wellen; und
- Figur 2: eine mögliche Kennlinie einer Drehmomentübertragungseinrichtung gemäß der Erfindung.

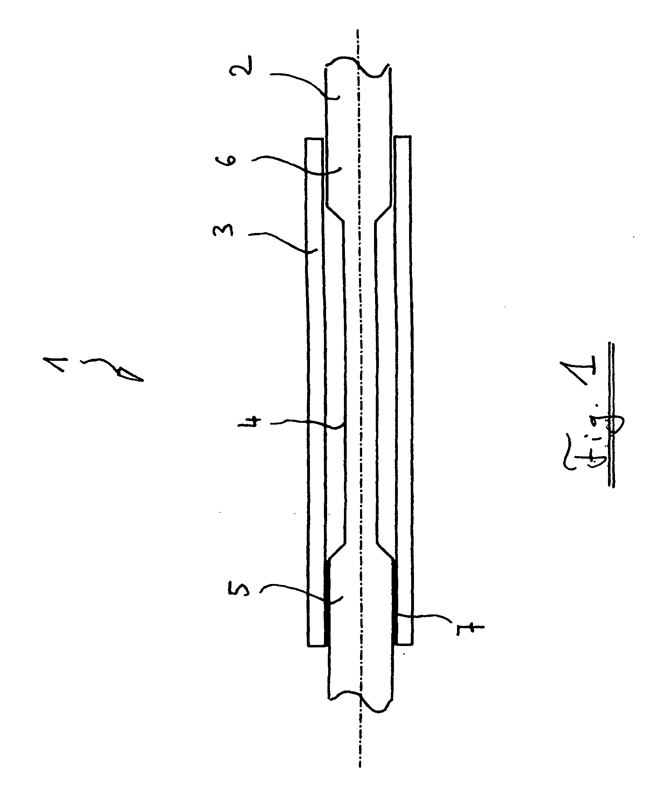

**Figur 1** zeigt eine Drehmomentübertragungseinrichtung 1, die zum Beispiel Teil eines Antriebsstranges eines Fahrzeugs ist. Die Drehmomentübertragungseinrichtung 1 weist eine innere Welle 2 auf, die in einer äußeren Hohlwelle 3 angeordnet ist. Die innere Welle 2 weist in ihrem Mittelbereich 4 einen Abschnitt auf, der einen geringeren Durchmesser hat als die Endbereiche 5, 6. Insgesamt ist dadurch die innere Welle 2 torsionsweicher als die äußere Hohlwelle 3.

Der linke Endbereich 5 der inneren Welle ist über eine Schweißnaht 7 fest mit der äußeren Hohlwelle 3 verbunden. Demgegenüber ist der rechte Endbereich 6 der inneren Welle 2 im lastfreien Zustand bzw. bei niedrigen Lasten nicht mit der äußeren Hohlwelle 3 verbunden. Bei niedrigen Lasten ist somit eine Relativverdrehung des rechten Endes 6 gegenüber dem linken Ende 5 bzw. gegenüber der äußeren Hohlwelle 3 möglich. Am rechten Ende 6 der inneren Welle 2 bzw. der äußeren Welle 3 sind jedoch Drehmomentübertragungsmittel (nicht dargestellt) vorgesehen, welche die Relativverdrehung der inneren Welle 2 gegenüber der äußeren Welle 3 auf einen vorgegebenen Verdrehwinkel begrenzen. Die Drehmomentübertragungsmittel (nicht dargestellt) können beispielsweise durch Zähne gebildet sein.

Alternativ dazu kann in der inneren Welle 2 eine Passfeder vorgesehen sein, die ab einem gewissen Relativverdrehwinkel an einem Absatz, der an der Innenseite der äußeren Hohlwelle 3 vorgesehen ist, ansteht. Für die beiden möglichen Drehrichtungen können unterschiedliche maximale Relativverdrehwinkel vorgesehen sein. Bei Überschreiten eines vorgegebenen von der Drehmomentenübertragungseinrichtung 1 zu übertragenden Drehmoments wird Drehmoment sowohl von der inneren Welle 2 als auch von der äußeren Hohlwelle 3 übertragen. Bei geringeren Drehmomenten wird Drehmoment lediglich von der inneren Welle 2 übertragen.

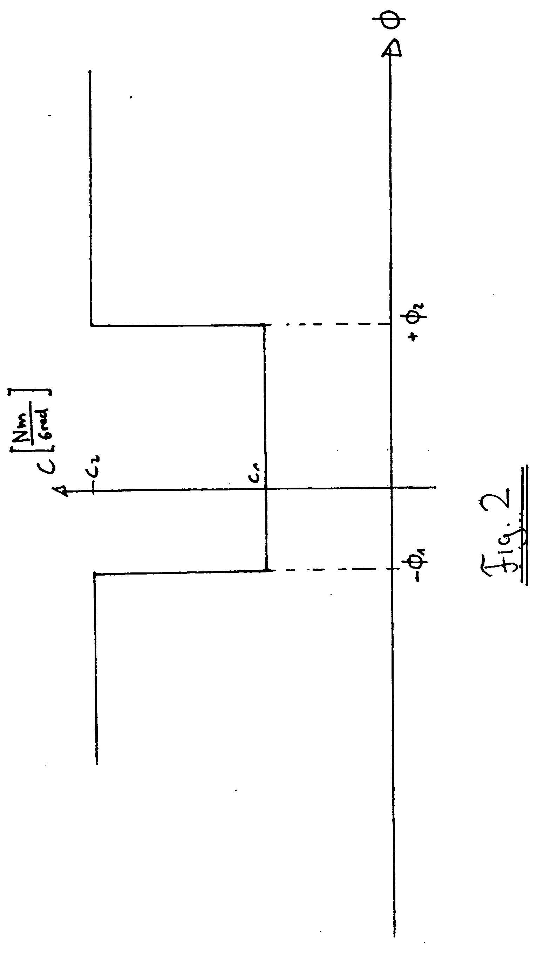

**Figur 2** zeigt einen mögliche Torsionssteifigkeitskennlinie der in **Figur 1** dargestellten Drehmomentübertragungseinrichtung 1. Im lastfreien Zustand der Drehmomentübertragungseinrichtung betrage der Relativverdrehwinkel φ= 0°. Bei geringen Drehmomenten können die beiden Wellen relativ zueinander verdreht werden und zwar in die eine Richtung bis zu dem Relativverdrehwinkel -φ₁ und die andere Richtung bis zu dem Relativverdrehwinkel +φ₂. Die Beträge der Winkel φ1 bzw. φ2 können sich, wie in **Figur 2** dargestellt, unterscheiden und sind durch das "Verdrehspiel" der Drehmomentübertragungsmittel festgelegt. Wenn der Relativverdrehwinkel den Betrag φ₁ bzw. φ₂ überschreitet, greifen die Drehmomentübertragungsmittel ein. Das heißt, die beiden Wellen können nicht weiter relativ zueinander verdreht werden, sondern nur noch weiter gemeinsam tordiert werden. Somit steigt die Torsionssteifigkeit c bei den Verdrehwinkeln -φ₁ bzw. +φ₂ von c₁ auf c₂ an.

Es sei ausdrücklich darauf hingewiesen, dass die Kennlinie nicht den Verlauf einer Sprungfunktion haben muss, wie dies in Fig. 2 dargestellt ist. Vorzugsweise sind die Drehmomentübertragungsmittel so gestaltet, dass sich ein "weicher" Kurvenverlauf ergibt. Wenn die Drehmomentübertragungsmittel in Form einer Verzahnung realisiert sind, kann ein weicher Kennlinienverlauf z.B. durch elastische Elemente erreicht werden, die an den ineinander eingreifenden Zahnflanken vorgesehen sind.

## Patentansprüche

1. Drehmomentübertragungseinrichtung (1) mit
einer inneren Welle (2), die in einer Hohlwelle (3) angeordnet ist, und Drehmomentübertragungsmitteln, welche eine Drehmomentübertagung von der einen auf die andere Welle ermöglichen, wobei
die Drehmomentübertragungsmittel axial beabstandet von dem Verbindungsbereich angeordnet sind, und
die Drehmomentübertragungsmittel Formschlusselemente oder Reibschlusselemente sind, die erst dann drehmomentübertragend miteinander in Wirkverbindung treten, so dass erst dann eine Drehmomentübertragung von der einen auf die andere Welle erfolgt, wenn
die eine Welle um einen vorgegebenen Torsionswinkel (-φ₁, +φ₂) gegenüber der anderen Welle tordiert ist,
**dadurch gekennzeichnet,**
**dass** die innere Welle (2) und die äußere Welle (3) in einem Verbindungsbereich fest miteinander verbunden sind,

2. Drehmomentübertragungseinrichtung (1) nach Anspruch 1, wobei die innere Welle (2) und die äußere Welle (3) in dem Verbindungsbereich miteinander verschweißt sind.

3. Drehmomentübertragungseinrichtung (1) nach einem der Ansprüche 1 oder 2, wobei die Torsionssteifigkeit (c₁) der inneren Welle (2) kleiner ist als die Torsionssteifigkeit (c₂ - c₁) der äußeren Welle (3).

4. Drehmomentübertragungseinrichtung nach einem der Ansprüche 1 bis 3, wobei die Drehmomentübertragungseinrichtung (1) zur wahlweisen Drehmomentübertragung in eine erste Drehrichtung und in eine der ersten Drehrichtung entgegengesetzte zweite Drehrichtung vorgesehen ist, wobei ausgehend von einer lastfreien Relativstellung der beiden Wellen (2, 3) ein vorgegebener Torsionswinkel (-φ₁) für die erste Drehrichtung und ein vorgegebener Torsionswinkel (+φ₂) für die zweite Drehrichtung vorgegeben ist, ab denen eine Drehmomentübertragung von der einen Welle (2) auf die andere Welle (3) stattfindet.

## Claims

1. A torque-transmitting device (1) comprising
an inner shaft (2) disposed in a hollow shaft (3) and torsion-transmitting means for transmitting torsion from one to the other shaft, wherein
the torque-transmitting means are axially spaced apart from the connecting region and
the torque-transmitting means are positive engagement elements or frictional engagement elements which come into operative torque-transmitting connection with one another so that torque can be transmitted from one to the other shaft only when one shaft has been twisted through a set angle (-φ₁, +φ₂) relative to the other shaft,
**characterised in that**
the inner shaft (2) and the outer shaft (3) are firmly connected to one another at a connecting region.

2. A torque-transmitting device (1) according to claim 1, wherein the inner shaft (2) and the outer shaft (3) are welded together in the connecting region.

3. A torque-transmitting device (1) according to claim 1 or claim 2, wherein the torsion resistance (c₁) of the inner shaft (2) is less than the torsion resistance (c₂-c₁) of the outer shaft (3).

4. A torque-transmitting device (1) according to any of claims 1 to 3, wherein the torque-transmitting device (1) is provided for transmitting torque optionally in a first direction of rotation or in a second direction of rotation opposite to the first direction, wherein starting from a load-free relative position of the two shafts (2, 3) a torsion angle (-φ₁) is set for the first direction of rotation and a torsion angle (+φ₂) is set for the second direction of rotation, beyond which torque is transmitted from one shaft (2) to the other shaft (3).

## Revendications

1. Dispositif de transmission de couple (1) doté d'un arbre intérieur (2) disposé dans un arbre creux (3) et de moyens de transmission de couple qui permettent une transmission de couple d'un arbre à l'autre en étant écartés axialement de la zone de liaison,
les moyens de transmission de couple étant des éléments de complémentarité de forme ou de complémentarité par friction qui n'entrent en liaison active l'un avec l'autre que par transmission de couple de sorte qu'une transmission de couple n'a lieu d'un arbre à l'autre que lorsqu'un arbre est tordu à un angle de torsion donné (-Φ₁, +Φ₂) par rapport à l'autre arbre,
**caractérisé en ce que**
l'arbre intérieur (2) et l'arbre extérieur (3) sont reliés fixement l'un à l'autre dans une zone de liaison.

2. Dispositif de transmission de couple (1) selon la revendication 1,
**caractérisé en ce que**
l'arbre intérieur (2) et l'arbre extérieur (3) sont soudés l'un à l'autre dans la zone de liaison.

3. Dispositif de transmission de couple (1) selon l'une des revendications 1 ou 2,
**caractérisé en ce que**
la rigidité à la torsion (c₁) de l'arbre intérieur (2) est inférieure à la rigidité à la torsion (c₂-c₁) de l'arbre extérieur (3).

4. Dispositif de transmission de couple selon l'une des revendications 1 à 3,
**caractérisé en ce que**
le dispositif de transmission de couple (1) est prévu pour la transmission de couple au choix dans une première direction de rotation et dans une deuxième direction de rotation opposée à la première, et en partant d'une position relative sans charge des deux arbres (2, 3), et un angle de torsion donné (-Φ₁) est prédéfini pour la première direction de rotation et un angle de torsion donné (+Φ₂) est prédéfini pour la deuxième direction de rotation à partir desquelles une transmission de couple se produit d'un arbre (2) à l'autre (3).
